## Europäisches Patentamt
## European Patent Office
## Office européen des brevets

(19)

(11) Numéro de publication: **0 066 516 B1**

(12) # FASCICULE DE BREVET EUROPEEN

(45) Date de publication du fascicule du brevet: **17.04.85**

(51) Int. Cl.⁴: **G 21 C 17/02, G 21 C 17/10**

(21) Numéro de dépôt: **82400974.0**

(22) Date de dépôt: **26.05.82**

(54) **Dispositif de surveillance de l'état du réfrigérant d'un réacteur nucléaire de puissance.**

(30) Priorité: **27.05.81 US 267541**

(43) Date de publication de la demande:
**08.12.82 Bulletin 82/49**

(45) Mention de la délivrance du brevet:
**17.04.85 Bulletin 85/16**

(84) Etats contractants désignés:
**BE DE FR GB IT SE**

(56) Documents cités:
**FR - A - 2 385 187
FR - A - 2 470 381
GB - A - 2 018 421**

**NUCLEAR ENGINEERING INTERNATIONAL, vol. 16, no. 175/6, février 1971, pages 62-65 G. McGONIGAL et al.:
"Measurements of sodium level in PFR"**

(73) Titulaire: **ELECTRICITE DE FRANCE Service National, 2, rue Louis Murat, F-75008 Paris (FR)**

(72) Inventeur: **Smith, Robert D., 9211 Bardon Road, Bethesda Maryland 20014 (US)**

(74) Mandataire: **Fort, Jacques et al, CABINET PLASSERAUD 84, rue d'Amsterdam, F-75009 Paris (FR)**

BUNDESDRUCKEREI BERLIN

**0 066 516**

## Description

La présente invention concerne la surveillance de l'état du réfrigérant dans un réacteur nucléaire de puissance. On sait qu'une des mesures de sécurité prises dans les réacteurs nucléaires consiste à surveiller, lors du fonctionnement, le niveau de réfrigérant dans le coeur, de façon à fournir une alerte en cas de perte dangereuse de réfrigérant. L'installation de système de mesure et de surveillance de ce genre est généralement considérée comme coûteuse, par suite de l'investissement requis et des modifications à apporter à l'architecture du réacteur pour y disposer l'équipement.

De plus, une information portant uniquement sur le niveau du réfrigérant est quelquefois insuffisante pour détecter un refroidissement inapproprié du coeur provoqué par un défaut de fonctionnement notable du réacteur, par exemple un écoulement à taux de vide élevé et une ébullition stagnante. Et, d'autre part, on doit éviter les détections erronées de perte de réfrigérant, car elles conduisent à un arrêt inutile et coûteux de la centrale.

La présente invention vise en conséquence à parmettre la surveillance de l'état du réfrigérant de façon économique, pratique et significative. L'invention vise également à fournier un système de détection couvrant tout le domaine de fonctionnement et capable de fournir une alerte précoce en cas de refroidissement inapproprié du coeur.

Dans ce but, l'invention propose notamment un dispositif de détection destiné à un réacteur nucléaire de puissance, comprenant un détecteur gamma qui possède une gaine externe verticale en contact avec le réfrigérant du réacteur et constituant un puits thermique pour un corps à chauffage interne par le rayonnement gamma, corps ayant au moins une région de résistance à l'écoulement thermique dans une zone de mesure associée à un dispositif à thermocouple muni de jonctions écartées l'une de l'autre et reliées à des moyens pour fournir une tension de signal représentative de la différence de température entre les jonctions, caractérisé en ce que celle des jonctions qui présente la réponse la plus lente est placée dans la région de résistance thermique, au-dessous de l'autre jonction, de telle façon qu'il y ait inversion de polarité du signal différentiel à la suite d'une baisse de la surface libre du réfrigérant à un niveau inférieur à une des jonctions, des moyens reliés aux jonctions permettant de surveiller la tension et, donc, les conditions de transfert thermique à l'extérieur du dispositif.

On détecte la perte de réfrigérant dans le coeur d'un réacteur par un simple réaménagement de détecteurs de taux de génération de puissance locale du genre décrit dans le brevet FR-A-2 420 827. Ces détecteurs comprennent des thermocouples à deux jonctions en chacune de plusieurs zones de mesure réparties dans le sens vertical. La pointe du thermocouple, où est placée la jonction la plus rapide, est située au-dessus de l'autre. Ainsi, la jonction qui réagit le plus vite constitue normalement la jonction froide, placée au-dessus de la région chaude du corps du détecteur aussi longtemps que le réfrigérant du réacteur est en contact thermique avec le détecteur sur toute sa longueur.

Lorsque la surface libre du réfrigérant descend au-dessous de la jonction qui réagit la plus vite, cette jonction devient la jonction chaude. En conséquence, la perte de réfrigérant, traduite par une baisse de la surface libre jusqu'à un niveau inférieur à celui de la jonction à réaction rapide, provoque une inversion de polarité du signal différentiel entre les jonctions. Cette inversion de polarité est utilisable pour déclencher une alarme ou entamer une séquence d'opérations en cas d'accident se traduisant par une perte de réfrigérant.

Dans un autre mode de réalisation, un dispositif de chauffage électrique est noyé dans le corps du détecteur parmi les thermocouples à deux jonctions pour augmenter le chauffage interne au-delà de celui qui est produit par le rayonnement gamma. La détection de niveau est ainsi favorisée ainsi que les données fournies par le signal de sortie des détecteurs pour déterminer les caractéristiques de transfert thermique de la surface externe des détecteurs à des niveaux critiques.

Un aspect important de l'invention est constitué par la modification ci-dessus indiquée du détecteur gamma de façon qu'il remplisse plusieurs fonctions de surveillance, notamment la surveillance du niveau de réfrigérant, la détermination des coefficients de transfert thermique et la surveillance de température, ainsi que la répartition de puissance locale. L'intérêt de l'invention est encore accru lorsqu'on prolonge les détecteurs dans le dôme supérieur d'une cuve de réacteur nucléaire de façon à surveiller les conditions du réfrigérant dans le dôme. On peut ainsi concevoir et réaliser un système économique pour constituer système de sécurité à partir de détecteurs existants destinés à surveiller la répartition de puissance locale.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels:

— la figure 1 est une vue de détail, en coupe longitudinale, d'un dispositif à détecteur gamma destiné à fournir une indication de perte de réfrigérant, montré alors que le fonctionnement est normal,

— les figures 1A et 1B, similaires à la figure 1, montrent le fonctionnement en cas d'alarme indiquant une perte de réfrigérant,

— la figure 2 est une vue en coupe suivant le plan 2-2 de la figure 1,

— la figure 3 est un schéma du circuit électrique associé à un des thermocouples du détecteur montré en figure 1,

2

— la figure 4 est une vue en coupe simplifiée montrant un réacteur nucléaire équipé d'un détecteur du genre montré en figures 1 et 3,

— la figure 5 est une vue en coupe à grande échelle d'une partie de l'installation montrée en figure 4,

— la figure 6 est un synotique de principe montrant un système de surveillance à fonctions multiples susceptible de comporter des détecteurs du genre montré en figures 1 et 3.

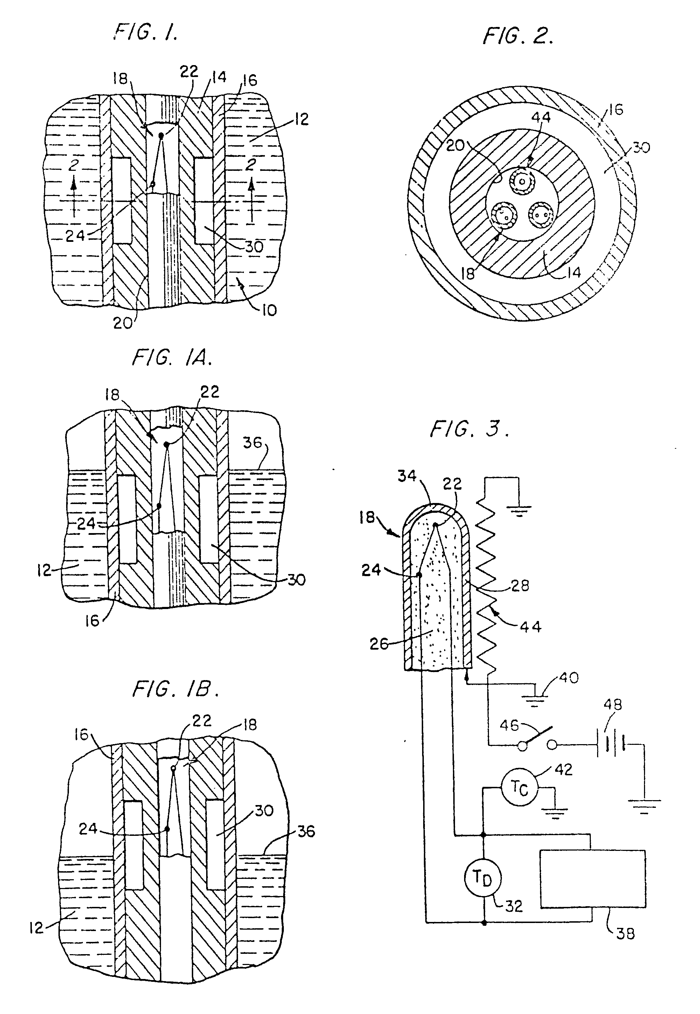

Les figures 1 et 3 montrent un détecteur gamma 10 du genre décrit dans le brevet FR 2 240 827 déjà mentionnée. Le détecteur est montré en figure 1 placé dans un coeur de réacteur baignant dans une masse de réfrigérant 12 (eau naturelle en général).

Le détecteur comprend un corps allongé 14 placé verticalement à travers le coeur, enfermé dans une gaine externe 16 en contact thermique avec le réfrigérant de façon à constituer un puits de chaleur externe vers lequel s'écoule radialement la chaleur lorsque le corps subit un chauffage interne sous l'action du rayonnement gamma lors de la génération de puissance. Le détecteur mesure donc le débit thermique, qui est directement lié à la puissance locale dissipée, en plusieurs zones de mesure réparties dans le sens vertical et dont l'une est montrée en figure 1. La mesure du taux de dégagement thermique local est effectuée par des thermocouples 18 à jonctions multiples en chacune des zones de mesure, dans un trou central 20 du corps chauffé. La figure 3 montre que chaque thermocouple comprend une paire de jonctions 22, 24 placées en série et noyées dans un milieu isolant 26, tel que de l'alumine, enfermée dans un chemisage ou doigt 28 en acier inoxydable. Les jonctions espacées sont disposées, dans le sens axial, à proximité d'une brèche de résistance thermique 30 ménagée dans le corps chauffé 14 en chacune des zones de mesure. La figure 3 montre un voltmètre 32 aux bornes des jonctions. Ce voltmètre fait partie d'une instrumentation externe permettant d'enregistrer une tension constituant signal de température différentielle qui reflète le taux de génération thermique locale ou la puissance dans les crayons de combustible adjacents.

Le dispositif à thermocouple 18 suivant l'invention est placé de façon que sa pointe 34, à laquelle est placée la jonction à réponse rapide 22, soit au-dessus de l'autre jonction 24. Cette disposition est inverse de celle déjà utilisée dans les détecteurs gamma décrits dans le brevet mentionnée plus haut. En général, l'inversion de la disposition des jonctions a peu d'effets sur le fonctionnement normal du thermocouple en vue de la mesure de la dissipation locale de puissance, la jonction 22 constituant la jonction froide, tandis que la jonction 24 constitue la jonction chaude placée dans la région chaude correspondant axialement à la brèche de résistance thermique 30. Ce fonctionnement normal est basé sur la présence de réfrigérant 12 sur toute la longueur du détecteur, ce qui donne une température de puits de chaleur uniforme à la gaine externe 16. La tension de signal appliquée au voltmètre 32 aura alors une polarité positive.

En cas de défaut de fonctionnement produisant une perte de réfrigérant, le niveau de la surface libre du réfrigérant 36 baisse, comme le montrent les figures 1A et 1B. Lorsque la surface libre descend au-dessous de la jonction haute 22, à réponse rapide (figure 1A), la région du corps chauffé 14 située au-dessus du réfrigérant devient chaude par rapport à la région placée au-dessous, ce qui provoque une inversion de polarité du signal appliqué au voltmètre 32. Une telle inversion de polarité du signal ne se produirait pas avec la disposition inverse de thermocouple qui était employée jusqu'ici. On peut utiliser l'inversion de polarité pour déclencher une alarme 38 ou une séquence d'opérations destinées à pallier les effets d'un accident sur le réacteur se traduisant par une perte de réfrigérant.

La figure 3 montre que la chemise 28 du thermocouple est mise à la masse en 40 pour permettre la mesure de la température absolue du détecteur en cas d'accident, à l'aide d'un voltmètre 42 mis à la masse et relié électriquement à la jonction 22. De plus, on peut accroître la valeur affichée de température, donnée par les voltmètres, en chaufant électriquement le corps 14 à l'aide d'un dispositif de chauffage 44 relié par un interrupteur 46 à une source externe de courant de chauffage 48. La figure 2 montre que le dispositif de chauffage peut être placé dans le trou 20 du corps chauffant 14 parmi les thermocouples 18 de façon à fournir un chauffage électrique supplémentaire à la demande dans toutes les zones de mesure occupées par les thermocouples respectifs 18 associés à chaque détecteur. Comme on le verra plus loin, non seulement le dispositif de chauffage 44 favorise la détection d'une baisse du niveau de réfrigérant, mais encore il permet de déterminer les conditions de transfert thermique à la surface externe du détecteur 10.

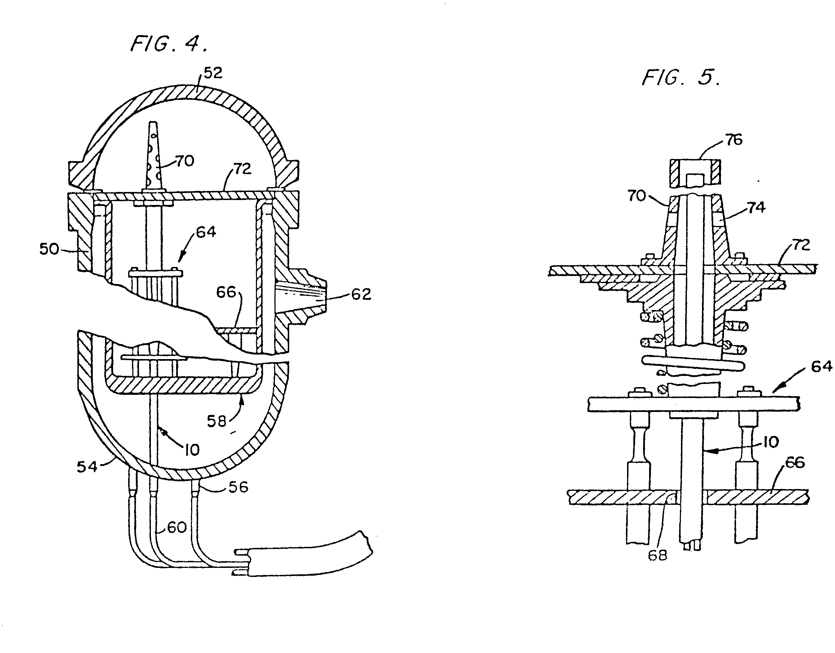

La figure 4 montre à titre d'exemple une cuve représentative de réacteur nucléaire 50, munie d'un dôme 52 à son extrémité haute. Des tubes de pénétration 56 traversent le fond 54 de la cuve. Les tubes 56 portent divers instruments, tels que des détecteurs 10 du genre décrit ci-dessus, insérés dans le coeur du réacteur 58, placé au-dessous du dôme 52, par le fond de la cuve. Les détecteurs sont reliés par des câbles 60 à un pupitre à instruments placé à distance, de façon bien connue. La cuve est également munie d'ajutages d'entrée et de sortie 62 permettant de la maintenir pleine de réfrigérant, tel que l'eau. Le coeur 58 est exposé au réfrigérant qui s'étend jusque dans le dôme 52.

Suivant un aspect de l'invention, un ou plusieurs des détecteurs 10 débordent vers le haut du coeur et pénètrent dans le dôme de façon à surveiller les conditions de transfert thermique du réfrigérant dans le dôme, y compris le niveau du réfrigérant. Les détecteurs continuent également à surveiller la génération de puissance locale dans le coeur. L'assemblage obturateur 64, de type connu, supporte les détecteurs s'étendant vers le haut et les guide. Ces assemblages sont utilisés pour fermer des ouvertures inutilisées dans la plaque supérieure de coeur 66 du coeur, exception faite d'une ouverture centrale 68 de la plaque qui est traversée par un détecteur 10 suivant l'invention, comme on le voit mieux sur la figure 5. Un tube prolongateur 70 est fixé à la plaque support supérieure 72 qui sépare généralement le dôme 52 de la chambre principale de la cuve, au-dessus du coeur. Le tube 70 protège et enferme la partie du détecteur 10 en saillie verticale dans le dôme et est en conséquence aligné avec l'assemblage de fermeture. Le tube 70 est percé d'ouvertures 74 et d'un trou terminal haut 76 pour exposer pleinement le détecteur au réfrigérant en même temps qu'il le protège contre les forces de déformation générées par l'écoulement du réfrigérant.

Comme on l'a déjà indiqué plus haut, l'alimentation à la demande du dispositif de chauffage 44 associée au détecteur 10 renforce les fonctions de surveillance multiples du détecteur. Pas exemple, un corps 14 chauffé intérieurement par rayonnement gamma a un taux de chauffage de 1,32 w/g lors du fonctionnement normal du réacteur, tel qu'illustré sur la figure 1, produit un signal de température différentielle TD entre les jonctions 22 et 24 qui est d'environ 2°C et apparaît sur le voltmètre 32. La température absolue TC du détecteur dans ces conditions, sans alimentation du dispositif de chauffage 44, mesurée par le voltmètre 42, sera très proche de la température TW du réfrigérant.

Si le dispositif de chauffage 44 est alimenté alors que le fonctionnement est normal, le taux de dissipation de chaleur dans le corps 14 est accru jusqu'à 65,89 w/g et la température différentielle TD devient 80°C environ. Mais l'augmentation $\Delta T$ de la température absolue du détecteur TC est faible, de l'ordre de 5 à 10°C, ce qui confirme l'existence d'un bon transfert thermique de refroidissement.

Si la surface libre du réfrigérant liquide 36 descend au-dessous de la jonction froide 22, comme le montre la figure 1A, le détecteur est exposé à de la vapeur ou un mélange de vapeur et d'hyrogène au niveau de la jonction 22. Au contraire, le détecteur reste environné de réfrigérant liquide au niveau de la jonction 24. La dégradation de l'évacuation de chaleur au niveau de la jonction haute 22 altère la symétrie de la répartition de l'écoulement thermique dans le corps 14 et provoque une inversion de polarité du signal de température différentielle TD qui devient approximativement de −2°C s'il n'y a pas de chauffage supplémentaire par le dispositif de chauffage 44. La température absolue du détecteur TC augmente de son côté et dépasse la température du réfrigérant TW d'une valeur $\Delta T$ qui est d'environ 2°C par suite de la dégradation des transferts thermiques dans l'environnement de vapeur.

On peut obtenir une indication plus nette de perte de réfrigérant en alimentant le dispositif de chauffage 44, ce qui provoque une différence de température de polarité inversée TD d'environ −50°C, tandis que la différence $\Delta T$ entre la température absoiue du détecteur et la température de réfrigérant augmente et atteint approximativement 100°C. En partant d'une température TW extimée du réfrigérant de 300°C, obtenue par des mesures antérieures, et de la température absolue du détecteur TC, avec $\Delta T = TC - TW$, on obtient des données permettant de calculer le coefficient de transfert thermique à la surface externe du détecteur, au-dessus de la surface libre 36 du réfrigérant à l'aide de l'expression connue:

$$h = \frac{Q}{\Delta T(A)}$$

où h est le coefficient de transfert thermique, Q est le taux de chauffage et A la surface du détecteur.

La figure 1B montre une baisse supplémentaire de la surface libre du réfrigérant, qui vient au-dessous de la jonction basse 24. Dans ce dernier cas, la température différentielle TD est proche de zéro, tandis que la différence $\Delta T$ entre les températures du détecteur et du réfrigérant est la même que dans le cas illustré en figure 1A, le coefficient de transfert thermique ha au-dessus du niveau du réfrigérant étant considérablement plus bas que le coefficient hb au-dessous du niveau de réfrigérant. On peut résumer de la façon suivante les comparaisons entre les modes de chauffage pour les différentes conditions de réfrigérant montrées en figures 1, 1A et 1B.

| Niveau du réfrigérant | chauffage électrique | Taux de chauffage du détecteur (w/g) | Signal de température différentielle TD(°C) | $\Delta T$ (°C) | Coefficient de transfert thermique (h) |
|---|---|---|---|---|---|
| bien au-dessus de la jonction froide (normal) | non | 1,32 | 2 | 0 | |
| | oui | 65,89 | 80 | 5—10 | $h_b \approx 1000$ |
| entre jonctions froides et chaudes | non | 1,32 | —2 | 2 | |
| | oui | 65,89 | —50 | 100 | $h_b < h_a$ $h_b \approx 100$ |
| bien au-dessous des deux jonctions | non | 1,32 | 0 | 2 | |
| | oui | 65,89 | 0 | >100 | $h_b < h_a$ $h_b < 100$ |

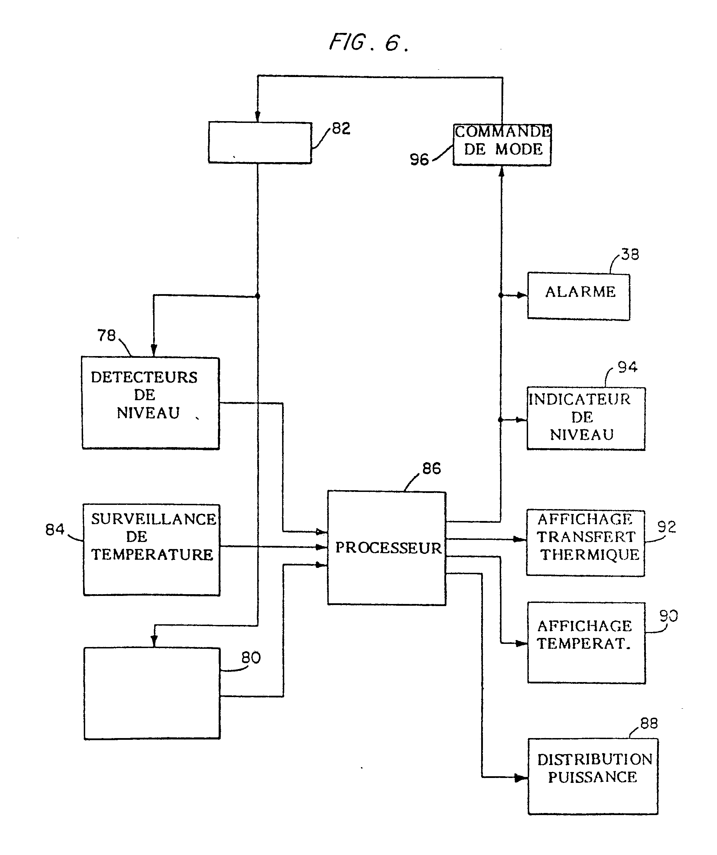

Le nombre de détecteurs gamma utilisés dans les réacteurs nucléaires pour surveiller la puissance locale varie habituellement entre 350 et 450. Lorsqu'on modifie ces détecteurs suivant la présente invention, ils peuvent être affectés de façon différente de façon à constituer un système de surveillance multifonctions. La figure 6 montre schématiquement comment on peut utiliser cette affectation pour constituer un système de surveillance multifonctions. On affecte respectivement des fractions variables des détecteurs désignées par les numéros de référence 78 et 80 à la détection du niveau de réfrigérant et à la mesure du transfert thermique par alimentation sélective des dispositifs de chauffage électrique associés, sous la commande du dispositif 82. Une fraction fixe des détecteurs, désignée par 84, peut être utilisée pour exercer la surveillance de température sans aucun chauffage électrique. Les signaux de sortie de tous ces détecteurs sont appliqués à un processeur de données 86 qui fournit des indications de répartition de puissance, de température absolue de détecteur, de coefficient de transfert thermique et de niveau de réfrigérant en 88, 90, 92 et 94. On peut changer la fraction des détecteurs affectée aux diverses fonctions de mesure à l'aide d'une boucle de réaction 96. Tous les détecteurs désignés par 78, 80 et 84 peuvent également fonctionner pour fournir les données nécessaires à l'indicateur de distribution de puissance 88.

**Revendications**

1. Dispositif de détection destiné à un réacteur nucléaire de puissance, comprenant un détecteur gamma qui possède une gaine externe verticale (16) en contact avec le réfrigérant (12) du réacteur et constituant un puits thermique pour un corps (14) à chauffage interne par le rayonnement gamma, corps ayant au moins une région de résistance à l'écoulement thermique dans une zone de mesure associée à un dispositif à thermocouple muni de jonctions (22, 24) écartées l'une de l'autre et reliées à des moyens pour fournir une tension de signal représentative de la différence de température entre les jonctions, caractérisé en ce que celle (24) des jonctions (22, 24) qui présente la réponse la plus lente est placée dans la région de résistance thermique, au-dessous de l'autre jonction (22), de telle façon qu'il y ait inversion de polarité du signal différentiel à la suite d'une baisse de la surface libre (36) du réfrigérant (12) à un niveau inférieur à une des jonctions, des moyens (32, 42) reliés aux jonctions permettant de surveiller la tension et, donc, les conditions de transfert thermique à l'extérieur du dispositif.

2. Dispositif selon la revendication 1, caractérisé en ce que les moyens de surveillance comprennent des moyens indicateurs pour détecter la perte de réfrigérant du fait de l'inversion de polarité de la tension de signal.

3. Dispositif selon la revendication 1 ou 2 à plusieurs zones de mesure réparties le long des corps (14), caractérisé en ce que la jonction (22) située au-dessus de la région de résistance à l'écoulement thermique est placée à proximité d'une pointe (34) du dispositif à thermocouple, au-dessus de l'autre jonction (24) de façon que dans chaque zone de mesure la tension de signal s'inverse lorsqu'on passe

5

d'un refroidissement uniforme de la gaine (16) à une baisse de la surface libre du réfrigérant au-dessous du niveau de la première jonction (22).

4. Dispositif selon la revendication 3, caractérisé en ce que le dispositif à thermocouple comporte une chemise (28) reliée à la masse enfermant les jonctions espacées, les moyens de surveillance de la tension comportant des premiers moyens indicateurs (32) reliés entre les jonction espacées pour mesurer le débit thermique dans le corps chauffé et des seconds moyens indicateurs (42) montés entre la masse et la première jonction pour mesurer la température absolue du détecteur.

5. Dispositif suivant la revendication 3 ou 4, caractérisé en ce qu'il comprend des moyens électriques de chauffage (44) noyés dans le corps pour augmenter à volonté le chauffage interne du corps.

6. Dispositif suivant la revendication 3, 4 ou 5, caractérisé en ce que la première jonction est placée au-dessus de la région de résistance thermique et à proximité de celle-ci dans chacune des zones de mesure.

7. Dispositif suivant l'une quelconque des revendications 1 à 6, caractérisé en ce qu'il comprend des moyens d'alarme (38) reliés aux jonctions espacées pour indiquer une perte de réfrigérant en réponse à une inversion de polarité de la tension entre les jonctions.

8. Dispositif suivant l'une quelconque des revendications précédentes pour réacteur de puissance ayant une cuve allongée dans le sens vertical destinée à recevoir le réfrigérant, comportant un dôme supérieur (52) et un fond (54) traversé par le détecteur (10), de forme allongée, destiné à surveiller la puissance générée dans le coeur placé dans la cuve à distance du dôme, caractérisé par des moyens faisant saillie dans le dôme (52) pour protéger le détecteur, qui se prolongent verticalement dans le dôme à partir du coeur, et des moyens reliés au détecteur pour surveiller les conditions de transfert thermique avec le réfrigérant dans le dôme.

9. Dispositif suivant la revendication 8, caractérisé en ce que les moyens pour protéger le détecteur (10) comportent un tube (70) enfermant le détecteur, muni d'ouvertures (74, 76) exposant le détecteur au réfrigérant dans le dôme(52).

## Patentansprüche

1. Überwachungseinrichtung für einen Leistungs-Kernreaktor mit einem Gamma-Detektor, der eine äußere vertikale Hülle (16) aufweist, die mit dem Kühlmittel (12) des Reaktors in Berührung steht und eine Wärmesenke für einen inneren, durch die Gamma-Strahlen erwärmten Körper (14) bildet, wobei der Körper mindestens einen Wärmeströmungswiderstandsbereich in einer Meßzone aufweist, die einem Thermoelement mit voneinander entfernt liegenden Verbindungsstellen (22, 24) zugeordnet ist, die mit Mitteln zum Erzeugen einer die Temperaturdifferenz zwischen den Verbindungsstellen darstellenden Signalspannung verbunden sind, dadurch gekennzeichnet, daß diejenige (24) der Verbindungsstellen (22, 24), deren Ansprechgeschwindigkeit am geringsten ist, in dem Wärmeströmungswiderstandsbereich unterhalb der anderen Verbindungsstelle (22) derart angeordnet ist, daß sich die Polarität des Differenzsignals bei einer Absenkung der freien Oberfläche (36) des Kühlmittels (12) bis auf ein unterhalb einer der Verbindungsstellen liegendes Niveau umkehrt und das mit den Verbindungsstellen verbundene Mittel (32, 42) eine Überwachung der Spannung und damit der Bedingungen der Wärmeübertragung auf die Außenseite der Einrichtung gestatten.

2. Einrichtung nach Anspruch 1, dadurch gekennzeichnet, daß die Überwachungsmittel Anzeigemittel zum Feststellen eines Kühlmittelverlustes anhand der Polaritätsumkehr der Signalspannung aufweisen.

3. Einrichtung nach Anspruch 1 oder 2 mit mehreren längs Körpern (14) verteilt angeordneten Meßzonen, dadurch gekennzeichnet, daß die oberhalb des Wärmeströmungswiderstandsbereiches liegende Verbindungstelle (22) derart in der Nähe einer Spitze (34) des Thermoelements über der anderen Verbindungsstelle (24) angeordnet ist, daß sich in jeder Meßzone die Signalspannung bei einem Übergang von einer gleichförmigen Abkühlung der Hülle (16) zu einer Absenkung der freien Oberfläche des Kühlmittels bis unter das Niveau der ersten Verbindungsstelle (22), umkehrt.

4. Einrichtung nach Anspruch 3, dadurch gekennzeichnet, daß das Thermoelement ein Gehäuse (28) aufweist, das mit der die auseinanderliegenden Verbindungsstellen umgebenden Masse verbunden ist, und daß die Mittel zum Überwachen der Spannung zwischen den auseinanderliegenden Verbindungsstellen angeschlossene erste Anzeigemittel (32) zum Messen der Wärmemenge in dem erwärmten Körper und zweite Anzeigemittel (42), die zwischen der Masse und der ersten Verbindungsstelle (22) zum Messen der absoluten Temperatur des Detektors angeordnet sind, aufweisen.

5. Einrichtung nach Anspruch 3 oder 4, dadurch gekennzeichnet, daß sie elektrische Heizmittel (44) aufweist, die in dem Körper untergebracht sind, um die innere Erwärmung des Körpers wählbar zu erhöhen.

6. Einrichtung nach Anspruch 3, 4 oder 5, dadurch gekennzeichnet, daß die erste Verbindungsstelle über dem Wärmeströmungswiderstandsbereich und in dessen Nähe in jeder der Meßzonen angeordnet ist.

7. Einrichtung nach einem der Ansprüche 1 bis 6, dadurch gekennzeichnet, daß sie an die auseinanderliegenden Verbindungsstellen angeschlossene Warnmittel (38) zum Anzeigen eines Kühlmittelverlustes in Abhängigkeit von einer Umkehr der Polarität der Spannung zwischen den Verbindungsstellen aufweist.

8. Einrichtung nach einem der vorhergehenden Ansprüche für einen Leistungsreaktor mit einem sich in vertikaler Richtung erstreckenden Behälter zur Aufnahme des Kühlmittels, der eine Haube (52) auf seiner Oberseite und einen Boden (54) aufweist, den der Detektor (10) in langgestreckter Form durchsetzt, um die Leistung zu überwachen, die in dem in einem Abstand von der Haube im Behälter angeordneten Reaktorkern erzeugt wird, gekennzeichnet durch Mittel, die einen Vorsprung in der Haube (52) bilden, um den Detektor zu schützen, der sich vertikal von dem Reaktorkern aus bis in die Haube erstreckt, und an den Detektor angeschlossene Mittel zum Überwachen der Bedingungen der Wärmeübertragung auf das Kühlmittel in der Haube.

9. Einrichtung nach Anspruch 8, dadurch gekennzeichnet, daß die Mittel zum schützen des Detektors (10) ein den Detektor umgebendes Rohr (70) aufweisen, das mit Öffnungen (74, 76) versehen ist, über die der Detektor dem Kühlmittel in der Haube (52) ausgesetzt ist.

**Claims**

1. Detection device for a nuclear power reactor, comprising a gamma sensor having a vertical outer sheath (16) in contact with the reactor coolant (12) and constituting a thermal well for a body (14) which is internally heated by gamma radiation, said body having at least one thermal flow resistance region formed therein in a measurement zone associated with a thermocouple device having mutually spaced junctions (22, 24) which are connected to means for delivering a signal voltage representative of the temperature differential between the junctions, characterized in that that (24) of the junctions (22, 24) which is faster responding is located in the thermal resistance region, under the other junction (22), whereby there is a polarity reversal of the differential signal in response to lowering of the free surface (36) of the coolant to a level lower than one of the junctions, means (32, 42) being connected to the junctions for monitoring the voltage and consequently the conditions of heat transfer externally of the device.

2. Device according to claim 1, characterized in that the monitoring means comprise indicator means for indicating loss of coolant in response to polarity reversal of the signal voltage.

3. Device according to claim 1 or 2 having a plurality of measurement zones distributed along the body (14), characterized in that that junction (22) which is located above the thermal flow resistance region is located in close proximity to a tip (34) of the thermocouple device, above the other junction (24), whereby in each measurement zone the signal voltage reverses when uniform cooling of the sheath (16) is substituted with depletion causing the free level of the coolant to be located under the level of the first junction (22).

4. Device according to claim 3, characterized in that the thermocouple device comprises a grounded cladding (28) enclosing the spaced junctions, voltage monitoring means comprising first indicator means (32) conected across the spaced junctions for measuring the thermal flow in the heated body and second indicator means (42) connected across ground and the first junction for measuring the absolute temperature of the detector.

5. Device according to claim 3 or 4, characterized in that it comprises electrical heating means (44) embedded in the body for selectively increasing the internal heating of the body.

6. Device according to claim 3, 4 or 5, characterized in that the first junction is located above the thermal resistance region and closely adjacent to it in each of the measurement zones.

7. Device according to any one of claims 1 to 6, characterized in that it comprises alarm means (38) connected to the spaced junctions for indicating a coolant loss in response to a reversal in polarity of voltage across the junctions.

8. Device according to any one of the preceding claims for a power reactor having a vertically elongated coolant containing vesel provided with an upper dome (52) and a bottom wall through which the elongated detector (10) for monitoring power generated in the core positioned within the vessel at a distance from the dome, characterized by means projecting into the dome (52) for protecting the detector, which means extend vertically into the dome from the core and means connected to the sensor for monitoring the thermal transfer conditions with the coolant within the dome.

9. Device according to claim 8, characterized in that the means for protecting the detector (10) comprise a tube (70) enclosing the detector, formed with openings (74, 76) through which the detector is exposed to coolant within the dome (52).

FIG. 1.

FIG. 2.

FIG. 1A.

FIG. 3.

FIG. 1B.

FIG. 5.

FIG. 4.

FIG. 6.